(19) Europäisches Patentamt / European Patent Office / Office européen des brevets

(11) **EP 3 992 775 B1**

(12) **EUROPEAN PATENT SPECIFICATION**

(45) Date of publication and mention
of the grant of the patent:
**06.09.2023   Bulletin 2023/36**

(21) Application number: **21199092.4**

(22) Date of filing: **27.09.2021**

(51) International Patent Classification (IPC):
**G06F 7/544** *(2006.01)*

(52) Cooperative Patent Classification (CPC):
**G06F 7/544**

(54) **EVALUATION FUNCTION GENERATION PROGRAM, EVALUATION FUNCTION GENERATION METHOD, OPTIMIZATION METHOD, AND OPTIMIZATION DEVICE**

PROGRAMM ZUR ERZEUGUNG EINER AUSWERTUNGSFUNKTION, VERFAHREN ZUR ERZEUGUNG EINER AUSWERTUNGSFUNKTION, OPTIMIERUNGSVERFAHREN UND OPTIMIERUNGSVORRICHTUNG

PROGRAMME DE GÉNÉRATION DE FONCTION D'ÉVALUATION, PROCÉDÉ DE GÉNÉRATION DE FONCTION D'ÉVALUATION, PROCÉDÉ D'OPTIMISATION, ET DISPOSITIF D'OPTIMISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2020   JP 2020182263**

(43) Date of publication of application:
**04.05.2022   Bulletin 2022/18**

(73) Proprietor: **FUJITSU LIMITED
Kawasaki-shi
Kanagawa 211-8588 (JP)**

(72) Inventor: **Takatsu, Motomu
Kanagawa 211-8588 (JP)**

(74) Representative: **Hoffmann Eitle
Patent- und Rechtsanwälte PartmbB
Arabellastraße 30
81925 München (DE)**

(56) References cited:
**US-A1- 2019 164 079     US-A1- 2020 302 306**

• **CHEN JIAYIN ET AL: "Generalized Simulated Annealing with Sequentially Modified Cost Function for Combinatorial optimization Problems", 2019 AUSTRALIAN & NEW ZEALAND CONTROL CONFERENCE (ANZCC), IEEE, 27 November 2019 (2019-11-27), pages 48-53, XP033683158, DOI: 10.1109/ANZCC47194.2019.8945670 [retrieved on 2019-12-30]**

**Description**

[Field]

The embodiments discussed herein are related to an evaluation function generation program, an evaluation function generation method, an optimization method, and an optimization device.

[Background Art]

In current society, information processing is performed in all fields. Such information processing is performed by arithmetic devices such as computers, which perform operations and processing on various data and obtain meaningful results to perform prediction, determination, control, and the like. One of the information processing is optimization, which is an important field. Examples include problems of, for example, obtaining a solution to minimize resources and costs needed to do something and to maximize its effect, which are obviously very important.

It is known that, among optimization problems, many of problems referred to as discrete optimization problems, combinatorial optimization problems, and the like are very difficult to solve because variables take discrete values, not continuous values. The greatest cause that makes it difficult to solve a discrete optimization problem is that there are a very large number of states referred to as local solutions, which are not optimum solutions but take minimum values in local neighborhoods.

There is no efficient general solution method to solve a discrete optimization problem. Thus, an approximate solution method using the nature intrinsic in the problem or a method referred to as a metaheuristic that does not rely much on the nature of the problem is used.

The contents described below relate to a solution method using a Markov-Chain Monte Carlo method (hereinafter abbreviated as MCMC method) of the latter represented by a simulated annealing method, an exchange Monte Carlo method (also referred to as replica exchange method), and the like.

The simulated annealing method is a method of obtaining an optimum solution by probabilistically changing a state (value of a variable vector) by using a random number. Hereinafter, a problem of minimizing a value of an evaluation function that is desired to be optimized will be described as an example, and the value of the evaluation function will be referred to as energy. When the value of the evaluation function is maximized, a sign of the evaluation function only needs to be changed.

It has been proved that, in the simulated annealing method, by appropriately determining an acceptance (acceptable) probability of a state transition using an energy change accompanying the transition and temperature, and by decreasing the temperature sufficiently slowly, the state reaches an optimum solution in a limit of infinite time (iteration count).

Thus, theoretically, in the simulated annealing method, an optimum solution may be obtained by taking an infinite iteration count. However, in practice, a solution needs to be obtained with a finite iteration count, and thus it is not possible to reliably obtain an optimum solution. Furthermore, since the temperature decreases very slowly as described above, the temperature does not sufficiently decrease in a finite time. Therefore, in an actual simulated annealing method, temperature is often decreased faster than when temperature is changed to ensure a theoretical convergence.

In the actual simulated annealing method, starting from an initial state, the iteration described above is repeated while the temperature is decreased. When an end determination condition such as reaching a certain iteration count or energy falling below a certain value is satisfied, the state at that time is output and the operation ends. Note that, since the temperature does not actually become zero at a finite iteration count, an occupancy probability of a state has a distribution represented by a Boltzmann distribution or the like even at the end, and does not necessarily become an optimum value or a good solution. Thus, it is a practical solution method to keep a state with the lowest energy obtained so far in the middle of iteration, and output the state at the end.

As may be imagined somewhat from the above description, a simulated annealing method is versatile and very attractive, but has a problem that calculation time is comparatively long due to the need to slowly decrease temperature. Moreover, there is another problem that it is difficult to appropriately adjust the way of decreasing temperature according to a problem. When temperature is decreased too slowly, the temperature does not decrease much in a finite time, so that an energy range of a final heat distribution becomes wide. Thus, an occupancy probability of a good solution is not increased. In contrast, when temperature is decreased too fast, the temperature decreases before escape from a local solution, so that a state remains stuck in a bad solution. Thus, a probability of obtaining a good solution decreases.

Although difficulty in temperature scheduling is relaxed to some extent by using the replica exchange method, an essential problem remains that it is difficult to escape from a local solution in a case where temperature is low, and a rate of staying in a good solution with low energy decreases in a case where the temperature is high.

As described above, difficulty in escaping from a local solution is one of causes of delay in reaching an optimum solution, and penalty energy for a constraint condition violation is one of causes to generate many local solutions from which it is difficult to escape.

A normal optimization problem is to obtain a value of a variable with the best value of an evaluation function among variables with some constraint conditions. In the MCMC method represented by a simulated annealing method, only one function may be used as an evaluation function for searching for a solution. Thus, to select a solution that satisfies a constraint condition, a linear sum of a function (cost function) that represents a value that is originally desired to be minimized and a penalty function that takes 0 when there is no constraint condition violation and a positive value when there is a violation is often used as an evaluation function.

In a case where a value taken by the penalty function (penalty energy) when there is a violation is large, it often becomes difficult to escape from a local solution, and a time taken to obtain a correct answer (optimum solution) often becomes very long. This is because, in discrete optimization, combinations of variables that satisfy a constraint condition exist only in a discrete manner, and in many cases, it is not possible to perform state transitions without passing through a state of a constraint condition violation. Therefore, it is desirable to take the penalty energy as small as possible.

However, when the penalty energy is too small, a value of a variable that makes a value of a cost function small is likely to be selected even if a constraint condition is violated. When the constraint condition is violated, the value of the cost function itself often becomes meaningless, and in such a case, only meaningless solutions are selected. Therefore, in some problems, since it is not possible to decrease the penalty energy, a time taken to obtain an optimum solution becomes very long.

US 2020/0302306 A1 discloses configuring a quantum computing system to determine a solution to an optimization problem including encoding the optimization problem in an encoding language to produce an encoded optimization model. The encoded optimization model is transformed into a unconstrained model. The encoded optimization model includes an objective function having one or more terms. The one or more terms are converted to one or more Pauli terms. An Ising Hamiltonian is generated using the one or more terms. The Ising Hamiltonian corresponds to the optimization problem. An instruction indicative of the Ising Hamiltonian is provided to the quantum computing system.

[Citation List]

[Patent Literature]

[PTL 1] Japanese Laid-open Patent Publication No. 2003-223322.

[Summary]

[Technical Problem]

As described above, when a discrete optimization problem with a constraint condition is solved by the MCMC method, the sum of a cost function that is originally desired to be minimized and a penalty function that takes a positive value when the constraint condition is not satisfied is used as an evaluation function. However, to ensure that a state where a value of the evaluation function is the lowest is a state where the constraint condition is satisfied, the penalty function has to be set to take a large value. Thus, there is a problem that a time taken to obtain an optimum solution becomes very long.

Such a problem is likely to occur in a routing problem such as a traveling salesman problem and an assignment problem such as a quadratic assignment problem, but widely exists also in other problems such as a knapsack problem.

In one aspect, it is an object of an embodiment to provide an evaluation function generation program, an evaluation function generation method, an optimization method, and an optimization device that are capable of accelerating search for an optimum solution.

[Solution to Problem]

The present invention provides an evaluation function generation program, in accordance with claim 1.

The present invention also provides an optimization method, in accordance with claim 7.

The present invention also provides an optimization device, in accordance with claim 8.

[Advantageous Effects of Invention]

In one aspect, an embodiment may accelerate search for an optimum solution.

[Brief Description of Drawings]

FIG. 1 is a diagram illustrating an example of an optimization device and an evaluation function generation method according to a first embodiment;
FIG. 2 is a diagram illustrating an example of a 32-city traveling salesman problem;
FIG. 3 is a diagram illustrating an example of simulation results of the 32-city traveling salesman problem;
FIG. 4 is a diagram illustrating an example of a knapsack problem;
FIG. 5 is a diagram illustrating an example of a factory location problem;
FIG. 6 is a block diagram illustrating a hardware example of an information processing device; and
FIG. 7 is a flowchart illustrating a flow of an example of an optimization method.

[Description of Embodiments]

Hereinafter, modes for carrying out embodiments will be described with reference to the drawings.
In each of the following embodiments, an evaluation function of a discrete optimization problem is converted into an evaluation function that makes an absolute value of a cost function small while maintaining a relative relationship between values of the cost function when a solution satisfies a constraint condition. This makes it possible to decrease penalty energy for preventing a constraint condition violation.
A constraint condition that has to be satisfied for a solution to be valid is represented by an equality or an inequality for a variable that represents a state. When the constraint condition is an inequality, the constraint condition may be transformed into an equality constraint condition by adding a variable (slack variable) that takes a positive value. Thus, hereinafter, only an equality constraint condition will be considered.
Furthermore, for the sake of simplicity of description, it is assumed that the variable takes two values, 0 and 1. Even in a case where a value of the variable is a general integer, the case may be treated as a problem of a binary variable by representing the value as a linear sum of a plurality of binary variables and constants.
A valid solution (including an optimum solution (solution with the lowest energy within a range that satisfies the constraint condition) or a valid solution with energy close to energy of the optimum solution, hereinafter referred to as a valid solution) always satisfies some equality constraint conditions. Thus, by combining these equalities, it is possible to create a function that takes a certain value for a valid solution. This function will be referred to as a conserved value function.
Even when a function representing the conserved value is added to the original cost function, an energy difference between valid solutions does not change because the conserved value function takes only a certain value for a valid solution. Thus, an energy structure of the valid solution does not change even when such a conversion is performed. Therefore, it is equivalent to solving the original discrete optimization problem.
On the other hand, by allowing the conserved value function to take different values for an invalid solution that does not satisfy the constraint condition, a relative relationship between the valid solution and the invalid solution changes. A likelihood of occurrence of valid and invalid solutions, which is determined by a cost function, also changes. Thus, appropriate conserved value function can reduce occurrence of an invalid solution.
For example, when a cost function is defined so that the cost function always takes a positive value, a value of the cost function becomes smaller when a value of a variable becomes 0. Thus, even when penalty energy due to a constraint condition violation is added, the total energy may be small. To prevent this, the penalty energy only needs to be increased, but as described above, a time taken to obtain an optimum solution becomes long. In this case, by adding an appropriate conserved value function that takes a negative value to the cost function (subtracting a conserved value function that takes a positive value from the cost function), it is possible to avoid a problem that energy decreases in a case where a variable that originally has to be 1 becomes 0 and becomes an invalid solution.
When the cost function has a large positive value for a valid solution, it is easy to obtain an invalid solution with more variables taking a value of 0 than the valid solution. In contrast, when the cost function has a large negative value for a valid solution, it is easy to obtain an invalid solution with more variables taking a value of 1 than the valid solution. Thus, in order for this method to work effectively, it is desirable to add a conserved value function to a valid solution so that a cost term has a value close to 0.
When such an appropriate conserved value function may be selected, a penalty coefficient described later may be made comparatively small so that penalty energy has a small value, and high-speed solution search may be performed.

(First Embodiment)

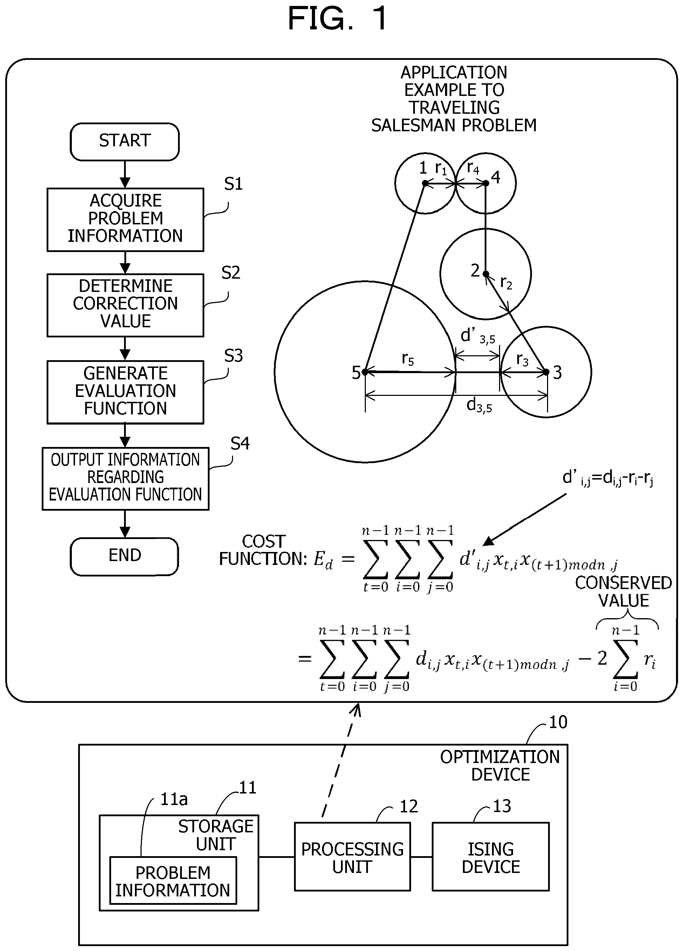

FIG. 1 is a diagram illustrating an example of an optimization device and an evaluation function generation method according to a first embodiment.

An optimization device 10 in the first embodiment generates an evaluation function based on problem information regarding a traveling salesman problem as an example of a discrete optimization problem with a constraint condition, and searches for an optimum solution based on information regarding the generated evaluation function.

The traveling salesman problem is a problem to minimize a cost of a case where a salesman (not limited to a salesman but also various mobile objects such as transport vehicles) departs from a certain city (point), visits a plurality of designated cities once at a time in turn, and then returns to the original city. A distance is normally used as the cost, but a time needed, fare, or the like may also be used. Furthermore, a straight-line distance (two-dimensional Euclidean distance, second order norm) is normally used as the distance, but a general distance such as a Manhattan distance (first order norm), an actual distance, or the like may also be used. Hereinafter, description will be made assuming that the distance is used as the cost.

Since the distance takes a positive value, a travel distance between cities takes a positive value, and when formulation is simply performed, a cost function takes a positive value.

When this problem is formulated with a quadratic expression of a binary variable, a variable $x_{t,i}$ that takes a value 1 when the salesman is in a city i at a certain time t (value that increases by 1 each time the salesman travels between cities, which corresponds to a number representing the order) is used as a variable.

First, when a travel distance for traveling from the city i to a city j is defined as $d_{i,j}$, a total travel distance ($d_{total}$), which is a total cost that is desired to be minimized, may be represented by the following Equation (1).

[Expression 1]

$$d_{total} = \sum_{t=0}^{n-1}\sum_{i=0}^{n-1}\sum_{j=0}^{n-1} d_{i,j} x_{t,i} x_{(t+1)modn,j} \tag{1}$$

In Equation (1), "(t + 1)modn" indicates a remainder of (t + 1)/n.

A constraint condition expression for a constraint condition that the salesman is staying in one city at each time may be represented by the following Equation (2).

[Expression 2]

$$\sum_{i=0}^{n-1} x_{t,i} = 1 \qquad (0 \le t \le n) \tag{2}$$

Furthermore, a constraint condition expression for a constraint condition that the salesman has to visit each city once may be represented by the following Equation (3).

[Expression 3]

$$\sum_{t=0}^{n-1} x_{t,i} = 1 \qquad (0 \le i \le n) \tag{3}$$

From Equations (1) to (3), an evaluation function to be minimized may be represented by the following Equation (4) by using penalty coefficients $\alpha_t$ and $\beta_i$ for the constraint conditions.

[Expression 4]

$$H(x) = \sum_{t=0}^{n-1}\sum_{i=0}^{n-1}\sum_{j=0}^{n-1} d_{i,j} x_{t,i} x_{(t+1)modn,j} \tag{4}$$

$$+ \sum_{t=0}^{n-1} \alpha_t \left( 1 - \sum_{i=0}^{n-1} x_{t,i} \right)^2 + \sum_{i=0}^{n-1} \beta_i \left( 1 - \sum_{t=0}^{n-1} x_{t,i} \right)^2$$

A first term of Equation (4) is a cost term (cost function) that represents a travel distance between cities. Second and third terms of Equation (4) are penalty terms (penalty functions). The second term is the penalty function for the constraint condition that the salesman is staying in one city at each time, and the third term is the penalty function for the constraint condition that the salesman has to visit each city once. The same values are often used for at and $\beta_i$.

The optimization device 10 of the first embodiment uses, instead of $d_{i,j}$ included in Equation (1), an effective travel distance corrected by using a correction value of the travel distance (cost), which takes a certain value for each city. FIG. 1 illustrates an example of correction values ($r_1$, $r_2$, $r_3$, $r_4$, and $r_5$) set for five cities.

Hereinafter, an effective travel distance between the city i and the city j is defined as $d'_{i,j} = d_{i,j} - r_i - r_j$ by using a correction value ($r_i$) of a travel distance for the city i and a correction value ($r_j$) of a travel distance for the city j. FIG. 1 illustrates an example of an effective travel distance ($d'_{3,5}$) between a city 3 and a city 5. By using a correction value of a travel distance for the city 3 ($r_3$) and a correction value of a travel distance for the city 5 ($r_5$), $d'_{3,5}$ may be represented as $d'_{3,5} = d_{3,5} - r_3 - r_5$.

When an effective travel distance as described above is used instead of a travel distance, a total travel distance for a valid solution that satisfies each constraint condition expression may be represented by the following Equation (5).

[Expression 5]

$$
\begin{aligned}
d'_{total} &= \sum_{t=0}^{n-1}\sum_{i=0}^{n-1}\sum_{j=0}^{n-1} d'_{i,j} x_{t,i} x_{(t+1)mod n,j} \\
&= \sum_{t=0}^{n-1}\sum_{i=0}^{n-1}\sum_{j=0}^{n-1} (d_{i,j} - r_i - r_j) x_{t,i} x_{(t+1)mod n,j} \\
&= \sum_{t=0}^{n-1}\sum_{i=0}^{n-1}\sum_{j=0}^{n-1} d_{i,j} x_{t,i} x_{(t+1)mod n,j} - \sum_{i=0}^{n-1} r_i \sum_{t=0}^{n-1} x_{t,i} \sum_{j=0}^{n-1} x_{(t+1)mod n,j} \\
&\quad - \sum_{j=0}^{n-1} r_j \sum_{t=0}^{n-1} x_{(t+1)mod n,j} \sum_{i=0}^{n-1} x_{t,i} \qquad\qquad (5) \\
&= d_{total} - \sum_{i=0}^{n-1} r_i \sum_{t=0}^{n-1} x_{t,i} - \sum_{j=0}^{n-1} r_j \sum_{t=0}^{n-1} x_{(t+1)mod n,j} \\
&= d_{total} - \sum_{i=0}^{n-1} r_i - \sum_{j=0}^{n-1} r_j \\
&= d_{total} - 2\sum_{i=0}^{n-1} r_i
\end{aligned}
$$

In equation (5), the conserved value function is equation (5'), and it takes the value represented by equation (5") for valid solutions.

[Expression 5']

$$
cv(\mathbf{x}) = \sum_{t=0}^{n-1}\sum_{i=0}^{n-1}\sum_{j=0}^{n-1} (r_i + r_j) x_{t,i} x_{(t+1)mod n,j} \qquad (5')
$$

[Expression 5"]

$$
cv(\mathbf{x}_{valid}) = 2\sum_{i=0}^{n-1} r_i \qquad (5").
$$

As indicated in Equation (5), a total travel distance ($d'_{total}$) is obtained by subtracting a certain positive value from the original total travel distance ($d_{total}$). Thus, since an energy difference between valid solutions is maintained, a structure of the problem is also maintained. This certain positive value is the conserved value function described above.

On the other hand, penalty energy added to an invalid solution with a small number of visited cities is due to the penalty function, and the energy is offset by an amount of a travel distance that benefits from the fact that there is a city that is not visited. When the travel distance is not corrected by using the correction value as described above, the energy benefits from an amount of the original travel distance. However, when the travel distance is corrected, since an apparent travel distance is shortened, the energy to be offset is decreased. As a result, even when the penalty coefficient is reduced, a constraint condition violation is less likely to occur, and the penalty coefficient may be selected to have a comparatively small value. As a result, solution search is accelerated.

In terms of making it difficult to generate a solution that does not satisfy a constraint condition by making the cost function close to 0, there is a certain effect even when the correction value of the travel distance for each city is set to the same value for all the cities. However, the farther a city is from other cities, the greater the travel distance (energy) benefits from a case where the city is not visited. Thus, a large amount of penalty energy is needed so as not to violate the constraint condition. Therefore, it is more effective to increase a correction value for a city as the city is farther from other cities so that an effective travel distance after correction is made as uniform as possible, because a smaller penalty coefficient may be selected. In the example of FIG. 1, the correction value ($r_5$) of the travel distance for the city 5 farthest from the other cities is larger than the other correction values ($r_1$ to $r_4$).

For the reasons described above, for example, it is desirable to select some cities close to each city, and on the basis of an average value of travel distances to the city, or the like, determine correction values.

The simplest example is to use half a distance to the nearest city as a correction value. When the correction value is set too large, a violation occurs in which the same city is visited more than once. Thus, it is desirable that the sum of twice the correction values does not become larger than an actual travel distance. In a case where half the distance to the nearest city is used as the correction value, safety is secured because this condition is always satisfied. Note that, since this method may be a little less effective, it is more effective to use a travel distance between two or more close cities.

The optimization device 10 illustrated in FIG. 1 generates an evaluation function having a total travel distance ($d'_{total}$) as indicated in Equation (5) as a cost function ($E_d$ in FIG. 1).

The optimization device 10 includes a storage unit 11, a processing unit 12, and an Ising device 13.

The storage unit 11 is, for example, a volatile storage device that is an electronic circuit such as a random access memory (RAM), or a non-volatile storage device that is an electronic circuit such as a hard disk drive (HDD) or a flash memory.

The storage unit 11 stores various programs for causing the optimization device 10 to execute various types of processing, such as an evaluation function generation program for generating an evaluation function, and stores problem information 11a regarding a traveling salesman problem that is an example of a discrete optimization problem.

The problem information 11a regarding the traveling salesman problem includes, for example, information regarding a distance between cities to visit and a constraint condition that a solution has to satisfy as described above.

Furthermore, the storage unit 11 may store various control parameters of the Ising device 13 (such as information regarding a temperature change schedule when the Ising device 13 performs a simulated annealing method).

The various data described above stored in the storage unit 11 may be input from outside the optimization device 10, or may be, for example, generated in the optimization device 10 on the basis of data input through an operation on an input device (not illustrated) by a user.

The processing unit 12 is implemented by a processor that is hardware such as a central processing unit (CPU), a graphics processing unit (GPU), or a digital signal processor (DSP). Note that the processing unit 12 may include an electronic circuit such as an application specific integrated circuit (ASIC) or a field programmable gate array (FPGA). Note that the processing unit 12 may be a set of a plurality of processors.

The processing unit 12 executes the evaluation function generation program stored in the storage unit 11 to perform processing described later. Furthermore, the processing unit 12 may control the Ising device 13 on the basis of various control parameters of the Ising device 13 stored in the storage unit 11.

The Ising device 13 searches for an optimum solution on the basis of information regarding a generated evaluation function.

The Ising device 13 is, for example, a device that performs the search described above by performing a Markov-Chain Monte Carlo (MCMC) method such as a simulated annealing method or a replica exchange method by using a digital circuit. Furthermore, the Ising device 13 may be a processor such as a CPU, a GPU, or a DSP that performs the search described above by executing software. Note that the processing unit 12 may perform the search described above by executing software without providing the Ising device 13.

FIG. 1 illustrates a flow of an example of the evaluation function generation method by the processing unit 12.

The processing unit 12 acquires the problem information 11a from, for example, the storage unit 11 (Step S1).

Then, on the basis of the acquired problem information 11a, the processing unit 12 determines a correction value ($r_i$) of a travel distance for each of n cities by the method as described above (Step S2).

Thereafter, by subtracting a conserved value function from the original cost function of the evaluation function of Equation (4) (a first term on the right side) represented on the basis of the problem information 11a, the processing unit 12 generates an evaluation function including a cost function ($E_d$ in FIG. 1) having an absolute value smaller than that of the original cost function (Step S3). The conserved value function is a value based on the sum total of correction values as indicated in Equation (5').

Although two penalty functions included in the evaluation function are the same as those included in Equation (4), for the reasons described above, penalty coefficients ($\alpha_t$ and $\beta_i$) may be made comparatively small by reducing the absolute value of the cost function.

The processing unit 12 outputs information regarding the generated evaluation function to the Ising device 13 (Step S4). Thus, the evaluation function generation processing ends.

Note that, in the processing of Step S4, the processing unit 12 may convert the evaluation function into an evaluation function ($E(x)$) of an Ising model as indicated in the following Equation (6) and output information regarding the evaluation function.

[Expression 6]

$$E(x) = -\sum_{\langle i,j \rangle} W_{ij} x_i x_j - \sum_{i=1} b_i x_i + c \qquad (6)$$

A first term on the right side of Equation (6) is obtain the sum total of products of values of two state variables with a weighting coefficient without omission and duplication for all of combinations of two state variables that may be selected from all of state variables included in $E(x)$. In Equation (6), $x_i$ is used as a state variable instead of $x_{i,j}$ indicated in Equation (4). An i-th state variable is indicated by $x_i$. A j-th state variable is indicated by $x_j$. A weighting coefficient that indicates a weight (for example, coupling strength) between the i-th state variable and the j-th state variable is indicated by $W_{ij}$, and $W_{ij}$ is a value that reflects the cost function and penalty function described above. Note that $W_{ii} = 0$. Furthermore, in many cases, $W_{ij} = W_{ji}$ (for example, a coefficient matrix based on weighting coefficients is often a symmetric matrix).

A second term on the right side is to obtain the sum total of products of a bias coefficient of each of all the state variables and the value of the state variable. A bias coefficient for the i-th state variable is indicated by $b_i$. A constant is indicated by c.

For example, a value "-1" of a spin in the Ising model corresponds to a value "0" of the state variable. A value "+1" of a spin in the Ising model corresponds to a value "1" of the state variable. For this reason, the state variable may also be referred to as a bit that takes a value of 0 or 1.

Within a range that satisfies a constraint condition, a combination of values of the state variables, which minimizes the value of the Equation (6), is a solution (optimum solution) of the problem.

The processing unit 12 may output, to the Ising device 13, $W_{ij}$, $b_i$, and c as described above as information regarding the evaluation function.

Furthermore, the processing unit 12 may cause the storage unit 11 to store the information regarding the generated evaluation function.

Note that a search result by the Ising device 13 may be displayed on a display device (not illustrated) connected to the optimization device 10, or may be transmitted to a device outside the optimization device 10.

(Simulation Result)

Hereinafter, a simulation result indicating an example of an effect when the cost function of the evaluation function indicated in Equation (4) is corrected as indicated in Equation (5) will be described.

A discrete optimization problem to be calculated is a 32-city traveling salesman problem.

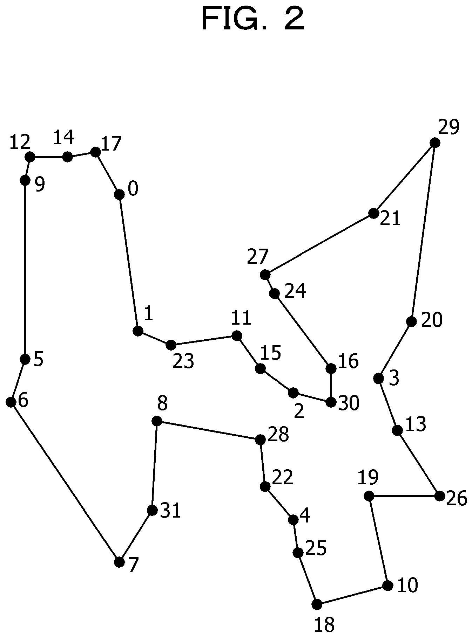

FIG. 2 is a diagram illustrating an example of the 32-city traveling salesman problem.

In FIG. 2, black circles indicate cities, and the number attached to each of the black circles represents a city number ("i" in Equation (4)). In the example illustrated in FIG. 2, for example, a city 7 and a city 29 are comparatively far from other cities, so comparatively large correction values ($r_7$ and $r_{29}$) are used for the city 7 and the city 29.

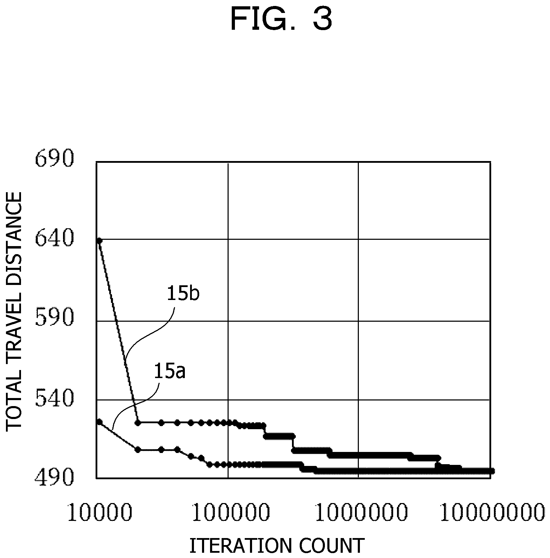

FIG. 3 is a diagram illustrating an example of simulation results of the 32-city traveling salesman problem.

A correct answer is known for the traveling salesman problem to be simulated. A horizontal axis represents an iteration count of the MCMC method, and a vertical axis represents a total travel distance. A simulation result 15a is a simulation result when a conserved value function as described above is used (in a case where a travel distance is corrected). A simulation result 15b is a simulation result in a case where a conserved value function as described above is not used (in a case where the evaluation function of Equation (4) is used as it is).

In this example, when a travel distance is corrected, a correct answer is reached with about a 10 times smaller iteration count than in the case where the evaluation function of Equation (4) is used as it is, and calculation is accelerated.

(Second Embodiment)

An optimization device of a second embodiment generates an evaluation function based on problem information regarding a knapsack problem as an example of a discrete optimization problem with a constraint condition, and searches for an optimum solution on the basis of information regarding the generated evaluation function.

The knapsack problem is a problem to find, when a value and cost of each item are determined, a method of selecting items that maximizes a total value within a range in which a total cost does not exceed a certain value. The cost is often a capacity, a weight, a price, or the like. Hereinafter, description will be made assuming that the cost is the weight.

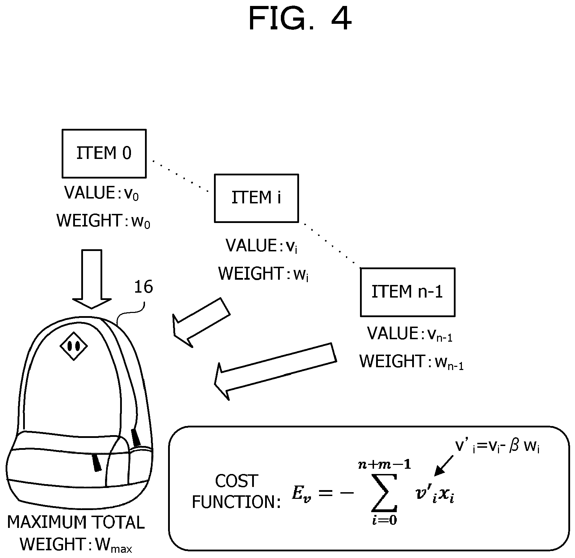

FIG. 4 is a diagram illustrating an example of the knapsack problem.

FIG. 4 illustrates an example of selecting n items and packing them in a knapsack 16.

When a value of an item i is defined as $v_i$, a weight of the item i is defined as $w_i$, and a binary variable that becomes 1 when the item i is selected is defined as $x_i$, a total value V and a total weight W are represented by the following Equations (7) and (8).

[Expression 7]

$$V = \sum_{i=0}^{n-1} v_i x_i \tag{7}$$

[Expression 8]

$$W = \sum_{i=0}^{n-1} w_i x_i \tag{8}$$

A constraint condition that the maximum total weight is $W_{max}$ (for example, the maximum total weight that may be packed in the knapsack 16) may be represented by the following Equation (9).

[Expression 9]

$$W_{max} - W = W_{max} - \sum_{i=0}^{n-1} w_i x_i \geq 0 \tag{9}$$

An inequality constraint condition as indicated in Equation (9) may be transformed into an equality constraint condition as indicated in the following Equation (10) by using a variable that takes a positive value.

[Expression 10]

$$W_{max} - y - \sum_{i=0}^{n-1} w_i x_i = 0 \tag{10}$$

In Equation (10), a variable y is referred to as a slack variable and takes an integer value or a real value. The variable y may be replaced with a linear sum of a plurality of binary variables, such as by a method of converting the variable y into a binary representation with required precision. For example, when a case of binary representation using m binary variables is considered, Equation (10) may be transformed into the following Equation (11) below.

[Expression 11]

$$W_{max} - \sum_{i=0}^{n+m+1} w_i x_i = 0 \quad (w_{n+k} = 2^k, 0 \le k \le m) \qquad (11)$$

Since the total value does not change even when the slack variable becomes 1, the slack variable may be regarded as a variable that represents selection of an item that has a weight but does not have a value.

From the above results, an evaluation function to be minimized may be represented as the following Equation (12).

[Expression 12]

$$E(x) = - \sum_{i=0}^{n+m-1} v_i x_i + \alpha \left( W_{max} - \sum_{i=0}^{n+m+1} w_i x_i \right)^2 \qquad (12)$$

$$(v_{n+k} = 0, w_{n+k} = 2^k, 0 \le k \le m)$$

Contrary to the traveling salesman problem, a value term (cost function), which is a first term on the right side of Equation (12), always has a negative value. Thus, a value of the evaluation function may be smaller when the total value is increased by selecting many items even if there are some constraint condition violations. As a result, a constraint condition violation will occur unless a considerably large penalty coefficient (a in Equation (12)) is selected.

The optimization device of the second embodiment uses the fact that the sum of the weights including items corresponding to slack variables is $W_{max}$, and uses, instead of $v_i$ included in a cost function of the evaluation function of Equation (12), $v'_i = v_i - \beta w_i$ obtained by correcting $v_i$. A predetermined correction coefficient is indicated by $\beta$, and a correction value of a value for each item is indicated by $\beta w_i$.

When such $v'_i$ is used, a cost function ($E_v$ in FIG. 4) is a function that has an absolute value smaller than that of the original cost function by adding a conserved value function that has a positive value based on the sum total of n + m correction values $\beta w_i$ to the original cost function that has a negative value.

By making such corrections, a value of the value becomes relatively small, and even when a comparatively small value is selected as the penalty coefficient (a) of Equation (12), a possibility of occurrence of a constraint condition violation due to excessive selection of items may be suppressed.

Note that, as the correction coefficient $\beta$, it is possible to use, for example, a ratio of the sum total of values to the sum total of weights of items, an average value of ratios of values to weights of items, a ratio of the sum total of values to the sum total of weights of a predetermined number of items selected in descending order of a ratio of a value to a weight, or an average value of ratios of values to weights of a predetermined number of items selected in descending order of a ratio of a value to a weight. Furthermore, it is also effective to select items in descending order of a ratio of a value to a weight and use a ratio of a value to a weight of an item selected immediately before (or immediately after) the total weight of the selected items violates a constraint condition. As a result, it is possible to obtain an effect that an item having a large value per weight may be easily selected.

The generation of an evaluation function of the knapsack problem as described above may be implemented by a similar configuration to that of the optimization device 10 illustrated in FIG. 1.

For example, a processing unit 12 acquires problem information regarding the knapsack problem from a storage unit 11, and calculates $\beta$, which is a correction coefficient. Then, the processing unit 12 adds a conserved value function having a positive value obtained on the basis of the sum total of $\beta w_i$ to the original cost function having a negative value to generate an evaluation function including a cost function having an absolute value smaller than that of the original cost function, and outputs information regarding the generated evaluation function to an Ising device 13.

According to the method of generating an evaluation function of the knapsack problem as described above, even when a penalty coefficient (a) is reduced as described above, a constraint condition violation is less likely to occur, and the penalty coefficient may be selected to have a comparatively small value. As a result, solution search is accelerated.

(Third Embodiment)

An optimization device of a third embodiment generates an evaluation function based on problem information regarding a quadratic assignment problem as an example of a discrete optimization problem with a constraint condition, and searches for an optimum solution on the basis of information regarding the generated evaluation function. The quadratic assignment problem is a problem to determine, when a plurality of objects to be assigned is assigned to a plurality of assignment destinations, the assignment destinations so that the sum total of products of a first cost between the objects and a second cost between the assignment destinations is minimized.

Hereinafter, a factory location problem, which is a representative problem of the quadratic assignment problem, will be described as an example. In the factory location problem, the objects to be assigned are a plurality of factories, and the plurality of assignment destinations is a plurality of points (candidate sites for construction). The factory location problem is a problem to determine, when a transportation amount of goods between a plurality of points and factories is determined, location of factories so that the sum total of transportation costs obtained by multiplying the transportation amount (the first cost described above) by a transportation distance (the second cost described above) is minimized.

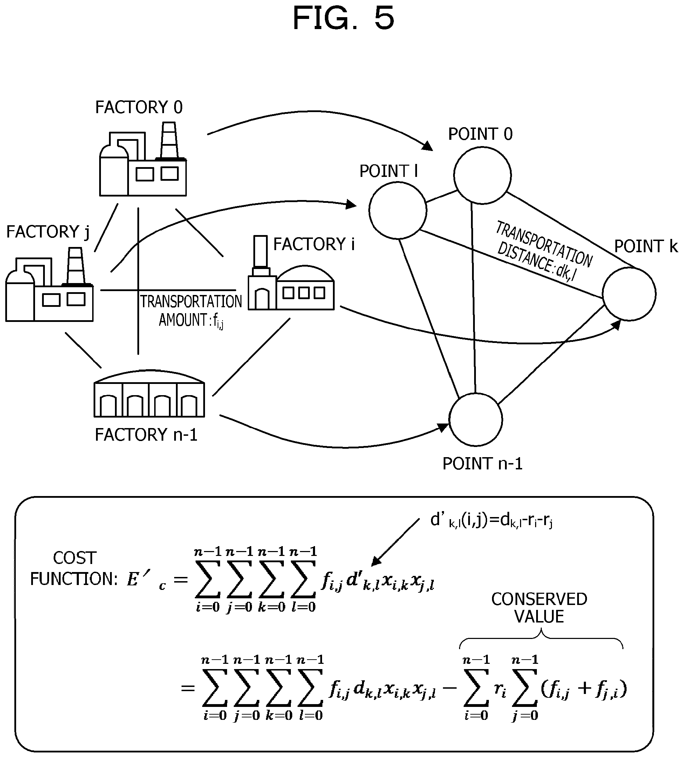

FIG. 5 is a diagram illustrating an example of the factory location problem.

FIG. 5 illustrates an example in which the number of factories is n and the factories are located at n points.

When a binary variable that becomes 1 in a case where a factory i is located at a point k is defined as $x_{i,k}$, a transportation amount between the factory i and a factory j is defined as $f_{i,j}$, and a transportation distance between the point k and a point l is defined as $d_{k,l}$, a cost function ($E_c$) representing a total transportation cost may be represented by the following Equation (13).

[Expression 13]

$$E_c = \sum_{i=0}^{n-1} \sum_{j=0}^{n-1} \sum_{k=0}^{n-1} \sum_{l=0}^{n-1} f_{i,j} d_{k,l} x_{i,k} x_{j,l} \qquad (13)$$

As in the case of the traveling salesman problem, a constraint condition expression for a constraint condition that each factory has to be located at one point may be represented by the following Equation (14).

[Expression 14]

$$\sum_{k=0}^{n-1} x_{i,k} = 1 \quad (0 \le i \le n) \qquad (14)$$

Furthermore, a constraint condition expression for a constraint condition that one factory has to be located at each candidate site may be represented by the following Equation (15).

[Expression 15]

$$\sum_{i=0}^{n-1} x_{i,k} = 1 \quad (0 \le k \le n) \qquad (15)$$

From these, an evaluation function to be minimized may be represented by the following Equation (16) by using penalty coefficients $\alpha_k$ and $\beta_i$ for the constraint conditions.

[Expression 16]

$$H(x) = \sum_{i=0}^{n-1} \sum_{j=0}^{n-1} \sum_{k=0}^{n-1} \sum_{l=0}^{n-1} f_{i,j} d_{k,l} x_{i,k} x_{j,l} \qquad (16)$$

$$+ \sum_{k=0}^{n-1} \alpha_k \left( 1 - \sum_{i=0}^{n-1} x_{i,k} \right)^2 + \sum_{i=0}^{n-1} \beta_i \left( 1 - \sum_{k=0}^{n-1} x_{i,k} \right)^2$$

Since both the transportation amount and the transportation distance have positive numbers, as in the case of the traveling salesman problem, a constraint condition violation that a certain factory is not located is likely to occur.

The optimization device of the third embodiment uses, instead of $d_{k,l}$ included in Equation (16), an effective travel distance corrected by using a correction value of the transportation distance, which takes a certain value for each factory.

An effective travel distance between the point k and the point I may be defined as $d'_{k,l}(i, j) = d_{k,l} - r_i - r_j$ by using a correction value ($r_i$) of a transportation distance for the factory i and a correction value ($r_j$) of a transportation distance for the factory j. When this effective travel distance is used, a cost function ($E'c$ in FIG. 5) of a total transportation cost for a valid solution that satisfies each constraint condition expression may be represented by the following Equation (17).

[Expression 17]

$$\sum_{i=0}^{n-1}\sum_{j=0}^{n-1}\sum_{k=0}^{n-1}\sum_{l=0}^{n-1} f_{i,j} d'_{k,l} x_{i,k} x_{j,l}$$

$$= \sum_{i=0}^{n-1}\sum_{j=0}^{n-1}\sum_{k=0}^{n-1}\sum_{l=0}^{n-1} f_{i,j} (d_{k,l} - r_i - r_j) x_{i,k} x_{j,l}$$

$$= \sum_{i=0}^{n-1}\sum_{j=0}^{n-1}\sum_{k=0}^{n-1}\sum_{l=0}^{n-1} f_{i,j} d_{k,l} x_{i,k} x_{j,l} \tag{17}$$

$$- \sum_{i=0}^{n-1} r_i \sum_{j=0}^{n-1} f_{i,j} \sum_{k=0}^{n-1}\sum_{l=0}^{n-1} x_{i,k} x_{j,l} - \sum_{j=0}^{n-1} r_j \sum_{i=0}^{n-1} f_{i,j} \sum_{l=0}^{n-1}\sum_{k=0}^{n-1} x_{i,k} x_{j,l}$$

$$= \sum_{i=0}^{n-1}\sum_{j=0}^{n-1}\sum_{k=0}^{n-1}\sum_{l=0}^{n-1} f_{i,j} d_{k,l} x_{i,k} x_{j,l} - \sum_{i=0}^{n-1} r_i \sum_{j=0}^{n-1} f_{i,j} - \sum_{j=0}^{n-1} r_j \sum_{i=0}^{n-1} f_{i,j}$$

$$= \sum_{i=0}^{n-1}\sum_{j=0}^{n-1}\sum_{k=0}^{n-1}\sum_{l=0}^{n-1} f_{i,j} d_{k,l} x_{i,k} x_{j,l} - \sum_{i=0}^{n-1} r_i \sum_{j=0}^{n-1} (f_{i,j} + f_{j,i})$$

In equation (15), the conserved value function is equation (17'), and it takes the value represented by equation (17") for valid solutions.

[Expression 17']

$$cv(\mathbf{x}_{valid}) = \sum_{i=0}^{n-1} r_i \sum_{j=0}^{n-1} (f_{i,j} + f_{j,i}) \tag{17'}$$

[Expression 17"]

$$cv(\mathbf{x}) = \sum_{i=0}^{n-1}\sum_{j=0}^{n-1}\sum_{k=0}^{n-1}\sum_{l=0}^{n-1} (r_i + r_j) f_{i,j} x_{i,k} x_{j,l} \tag{17''}$$

As indicated in Equation (17) (and FIG. 5), the total transportation cost is obtained by subtracting a certain positive value from the original total transportation cost having a positive value. Thus, since an energy difference between valid solutions is maintained, a structure of the problem is also maintained. This certain positive value is the conserved value function described above.

Note that, in the factory location problem, since the transportation amount and the transportation distance are symmetrical, an effective transportation amount corrected by using a correction value of the transportation amount, which takes a certain value for each point, may be used instead of an effective transportation distance.

An effective transportation amount between the factory i and the factory j may be defined as $f'_{i,j}(k, l) = f_{i,j} - g_k - g_l$ by using a correction value ($g_k$) of a transportation amount for the point k and a correction value ($g_l$) of a transportation amount for the point I.

The correction value of the transportation distance or the transportation amount as described above may be the same value between all factories or points.

The generation of an evaluation function of the factory location problem as described above may be implemented by a similar configuration to that of the optimization device 10 illustrated in FIG. 1.

For example, a processing unit 12 acquires problem information regarding the factory location problem from a storage unit 11, and determines a correction value. Then, the processing unit 12 subtracts a conserved value function obtained on the basis of the sum total of correction values from the original cost function to generate an evaluation function including a cost function having an absolute value smaller than that of the original cost function, and outputs information regarding the generated evaluation function to an Ising device 13.

According to the method of generating an evaluation function of the factory location problem as described above, even when a penalty coefficient ($\alpha_k$ or $\beta_i$ in Equation (16)) is reduced, a constraint condition violation is less likely to occur, and the penalty coefficient may be selected to have a comparatively small value. As a result, solution search is accelerated.

(Hardware Example of Optimization Device)

The optimization device 10 illustrated in FIG. 1 may be implemented by, for example, an information processing device having the following hardware configuration.

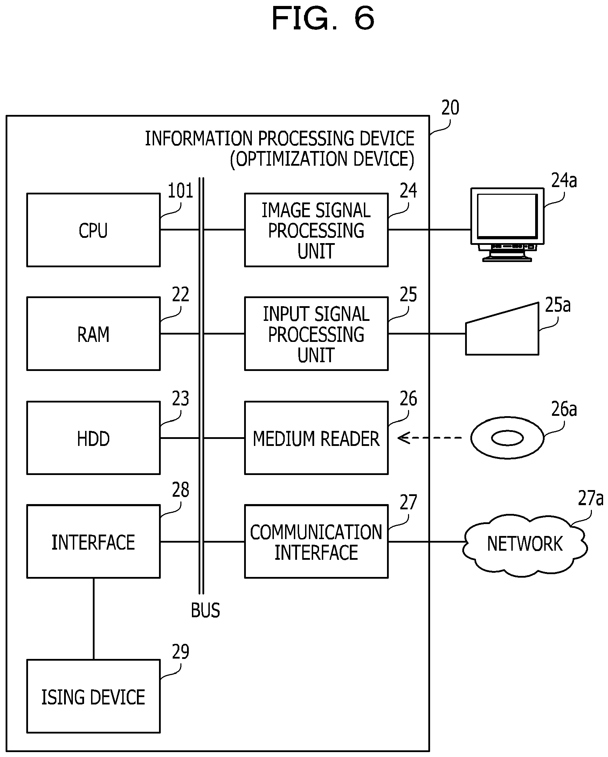

FIG. 6 is a block diagram illustrating a hardware example of the information processing device.

An information processing device 20 is, for example, a computer, and includes a CPU 21, a RAM 22, an HDD 23, an image signal processing unit 24, an input signal processing unit 25, a medium reader 26, a communication interface 27, and an interface 28. The units described above are connected to a bus.

The CPU 21 is a processor including an arithmetic circuit that executes program instructions. The CPU 21 loads at least part of a program and data stored in the HDD 23 into the RAM 22 to execute the program. Note that the CPU 21 may include a plurality of processor cores, the information processing device 20 may include a plurality of processors, and processing described below may be executed in parallel by using the plurality of processors or processor cores.

The RAM 22 is a volatile semiconductor memory that temporarily stores a program executed by the CPU 21 and data used by the CPU 21 for operations. Note that the information processing device 20 may include a memory of a type different from the RAM, or may include a plurality of memories.

The HDD 23 is a non-volatile storage device that stores software programs such as an operating system (OS), middleware, and application software, and data such as the problem information described above. Examples of the program include a program that causes the information processing device 20 to execute processing of generating an evaluation function. Note that the information processing device 20 may include another type of storage device such as a flash memory or a solid state drive (SSD), or may include a plurality of non-volatile storage devices.

The image signal processing unit 24 outputs, for example, an image representing a calculation result or the like of a discrete optimization problem calculated by an Ising device 29 to a display 24a connected to the information processing device 20 in accordance with an instruction from the CPU 21. As the display 24a, a cathode ray tube (CRT) display, a liquid crystal display (LCD), a plasma display panel (PDP), an organic electro-luminescence (OEL) display, or the like may be used.

The input signal processing unit 25 acquires an input signal from an input device 25a connected to the information processing device 20, and outputs the input signal to the CPU 21. As the input device 25a, a pointing device such as a mouse, a touch panel, a touch pad, or a trackball, a keyboard, a remote controller, a button switch, or the like may be used. Furthermore, a plurality of types of input devices may be connected to the information processing device 20.

The medium reader 26 is a reading device that reads a program or data recorded on a recording medium 26a. As the recording medium 26a, for example, a magnetic disk, an optical disk, a magneto-optical disk (MO), a semiconductor memory, or the like may be used. Examples of the magnetic disk include a flexible disk (FD) and an HDD. Examples of the optical disk include a compact disc (CD) and a digital versatile disc (DVD).

The medium reader 26 copies, for example, a program or data read from the recording medium 26a to another recording medium such as the RAM 22 or the HDD 23. The read program is executed by the CPU 21, for example. Note that the recording medium 26a may be a portable recording medium, and may be used for distribution of a program or data. Furthermore, the recording medium 26a or the HDD 23 may be referred to as a computer-readable recording medium.

The communication interface 27 is an interface that is connected to a network 27a and communicates with another information processing device via the network 27a. The communication interface 27 may be a wired communication interface connected by a cable to a communication device such as a switch, or may be a wireless communication interface connected by a wireless link to a base station.

The interface 28 is connected to the Ising device 29, and transmits and receives data between the CPU 21 and the Ising device 29. The interface 28 may be, for example, a wired communication interface such as peripheral component interconnect (PCI) express, or may be a wireless communication interface.

The Ising device 29 searches for a state where a value of an evaluation function is minimized on the basis of information regarding a generated evaluation function. The Ising device 29 is, for example, a device that performs the search described above by performing an MCMC method such as a simulated annealing method or a replica exchange method by using a digital circuit. Furthermore, the Ising device 29 may be a processor such as a CPU, a GPU, or a DSP that performs the search described above by executing software.

Note that the Ising device 29 may be provided outside the information processing device 20.

Finally, a flow of an optimization method performed by the information processing device 20 as described above will be briefly summarized.

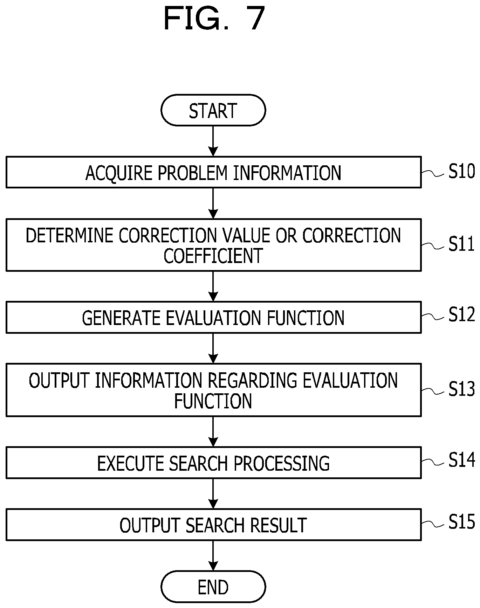

FIG. 7 is a flowchart illustrating a flow of an example of the optimization method.

The CPU 21 acquires problem information of a discrete optimization problem as described above from, for example, the HDD 23 (Step S10).

Then, the CPU 21 determines a correction value or correction coefficient as described above on the basis of the acquired problem information (Step S11).

Thereafter, the CPU 21 adds or subtracts a conserved value function obtained on the basis of the correction value or the correction coefficient to or from the original cost function represented on the basis of the problem information, to generate an evaluation function including a cost function having an absolute value smaller than that of the original cost function (Step S12).

The CPU 21 outputs information regarding the generated evaluation function to the Ising device 29 (Step S13).

The Ising device 29 executes search processing for searching for an optimum solution on the basis of the information regarding the generated evaluation function (Step S14).

After the search by the Ising device 29, the CPU 21 controls the image signal processing unit 24 to output a search result to the display 24a (Step S15). Thus, the series of processing of the optimization method ends.

The processing contents described above may be implemented by causing the information processing device 20 to execute a program.

The program may be recorded on a computer-readable recording medium (for example, the recording medium 26a). As the recording medium, for example, a magnetic disk, an optical disk, a magneto-optical disk, a semiconductor memory, or the like may be used. Examples of the magnetic disk include an FD and an HDD. Examples of the optical disk include a CD, a CD-recordable (R)/rewritable (RW), a DVD, and a DVD-R/RW. The program may be recorded on a portable recording medium and distributed. In this case, the program may be copied from the portable recording medium to another recording medium (for example, the HDD 23) and then executed.

In the above, one aspect of the evaluation function generation program, the evaluation function generation method, the optimization method, and the optimization device of the embodiment has been described on the basis of the embodiments. However, these are only examples and are not limited to the above description.

**Claims**

1. An evaluation function generation program in which a computer (10) comprising an Ising device (13) performs processing of:

   acquiring (S1) problem information (11a) representing a discrete optimization problem that have a constraint condition that has to be satisfied for a solution of the discrete optimization problem to be valid;
   generating (S3), by subtracting a conserved value function having a certain value when a solution satisfies the constraint condition from a first cost function, or by adding the conserved value function to the first cost function, a second evaluation function including a second cost function that has a second absolute value smaller than a first absolute value of the first cost function of a first evaluation function, wherein the second cost function is represented by the subtraction of the conserved value function from the first cost function or by the addition of the conserved value function to the first cost function, the first evaluation function being represented based on the problem information (11a), and being represented by a linear sum of the first cost function and a penalty function that becomes 0 when the constraint condition is satisfied and becomes a value other than 0 when the constraint condition is not satisfied; and
   outputting (S4) information regarding the generated second evaluation function to the Ising device (13) that searches for an optimum solution of the discrete optimization problem by performing a simulated annealing method wherein,
   the Ising device (13) searches for the optimum solution of the discrete optimization problem based on the information regarding the generated second evaluation function.

2. The evaluation function generation program according to claim 1, wherein

the discrete optimization problem is a routing problem,

the conserved value function is a positive value obtained based on of a sum total of correction values of costs determined for a plurality of points, and

the second cost function is a function obtained by subtracting the conserved value function from the first cost function that represents a total cost and has a positive value.

3. The evaluation function generation program according to claim 2, wherein the correction value increases as a distance between a first point among the plurality of points and another point increases.

4. The evaluation function generation program according to claim 1, wherein

the discrete optimization problem is a knapsack problem,

the conserved value function is a positive value obtained based on a sum total of correction values, each of which is represented by a product of a correction coefficient and a cost of each of a plurality of items to be packed and corrects a value of each of the plurality of items, and

the second cost function is a function obtained by adding the conserved value function to the first cost function that represents a total value and has a negative value.

5. The evaluation function generation program according to claim 4, wherein the correction coefficient is a first average value, which is an average of a value and weight of each of the plurality of items, or a second average value, which is an average of a predetermined number of the first average values selected in descending order, or a ratio of the value to the weight of an item that is selected immediately before or after a total weight of a plurality of items selected in descending order of a ratio of the value to the weight reaches a state that does not satisfy the constraint condition.

6. The evaluation function generation program according to claim 1, wherein

the discrete optimization problem is a quadratic assignment problem,

the conserved value function is a positive value obtained on the basis of a sum total of a correction value of a first cost determined for each of a plurality of objects to be assigned, or a correction value of a second cost determined for each of a plurality of assignment destinations of the plurality of objects, and

the second cost function is a function obtained by subtracting the conserved value function from the first cost function that represents a total cost and has a positive value.

7. An optimization method comprising:

acquiring (S1) problem information (11a) representing a discrete optimization problem that have a constraint condition that has to be satisfied for a solution of the discrete optimization problem to be valid;

generating (S3), by subtracting a conserved value function having a certain value when a solution satisfies the constraint condition from a first cost function, or by adding the conserved value function to the first cost function, a second evaluation function including a second cost function that has a second absolute value smaller than a first absolute value of the first cost function of a first evaluation function, wherein the second cost function is represented by the subtraction of the conserved value function from the first cost function or by the addition of the conserved value function to the first cost function, the first evaluation function being represented based on the problem information (11a), and being represented by a linear sum of the first cost function and a penalty function that becomes 0 when the constraint condition is satisfied and becomes a value other than 0 when the constraint condition is not satisfied; and

outputting (S4) information regarding the generated second evaluation function to an Ising device (13) that searches for an optimum solution of the discrete optimization problem by performing a simulated annealing method, wherein,

the Ising device (13) searches for the optimum solution of the discrete optimization problem based on the information regarding the generated second evaluation function.

8. An optimization device (10) comprising:

a storage unit (11) configured to store problem information (11a) representing a discrete optimization problem that have a constraint condition that has to be satisfied for a solution of the discrete optimization problem to be valid;

a processing unit (12) configured to:

acquire the problem information (11a),

generate, by subtracting a conserved value function having a certain value when a solution satisfies the constraint condition from a first cost function, or by adding the conserved value function to the first cost function, a second evaluation function including a second cost function that has a second absolute value smaller than a first absolute value of the first cost function of a first evaluation function, wherein the second cost function is represented by the subtraction of the conserved value function from the first cost function or by the addition of the conserved value function to the first cost function, the first evaluation function being represented based on the problem information (11a), and being represented by a linear sum of the first cost function and a penalty function that becomes 0 when the constraint condition is satisfied and becomes a value other than 0 when the constraint condition is not satisfied, and

output information regarding the generated second evaluation function to an Ising device (13); and

the Ising device (13) configured to search for an optimum solution of the discrete optimization problem by performing a simulated annealing method based on the information regarding the generated second evaluation function.

**Patentansprüche**

1. Bewertungsfunktions-Erzeugungsprogramm, bei dem ein Computer (10), der eine Ising-Vorrichtung (13) umfasst, die folgende Verarbeitung durchführt:

Erfassen (S1) von Problem informationen (11a), die ein diskretes Optimierungsproblem darstellen, das eine Randbedingung aufweist, die erfüllt sein muss, damit eine Lösung des diskreten Optimierungsproblems gültig ist;
Erzeugen (S3) einer zweiten Bewertungsfunktion, die eine zweite Kostenfunktion einschließt, die einen zweiten absoluten Wert aufweist, der kleiner als ein erster absoluter Wert der ersten Kostenfunktion einer ersten Bewertungsfunktion ist, indem eine konservierte Wertfunktion, die einen bestimmten Wert aufweist, wenn eine Lösung die Randbedingung erfüllt, von einer ersten Kostenfunktion subtrahiert wird, oder indem die konservierte Wertfunktion zu der ersten Kostenfunktion addiert wird, wobei die zweite Kostenfunktion durch die Subtraktion der konservierten Wertfunktion von der ersten Kostenfunktion oder durch die Addition der konservierten Wertfunktion zu der ersten Kostenfunktion dargestellt wird, wobei die erste Bewertungsfunktion auf der Grundlage der Probleminformation (11a) dargestellt wird und durch eine lineare Summe der ersten Kostenfunktion und einer Straffunktion dargestellt wird, die 0 wird, wenn die Randbedingung erfüllt ist, und einen anderen Wert als 0 annimmt, wenn die Randbedingung nicht erfüllt ist; und
Ausgeben (S4) von Informationen bezüglich der erzeugten zweiten Bewertungsfunktion an die Ising-Vorrichtung (13), die nach einer optimalen Lösung des diskreten Optimierungsproblems sucht, indem sie ein Simulated-Annealing-Verfahren durchführt, wobei
die Ising-Vorrichtung (13) nach der optimalen Lösung des diskreten Optimierungsproblems auf der Grundlage der Informationen bezüglich der erzeugten zweiten Bewertungsfunktion sucht.

2. Bewertungsfunktions-Erzeugungsprogramm nach Anspruch 1, wobei

das diskrete Optimierungsproblem ein Routingproblem ist,
die konservierte Wertfunktion ein positiver Wert ist, der auf der Grundlage einer Gesamtsumme von Korrekturwerten von Kosten erhalten wird, die für eine Vielzahl von Punkten bestimmt werden, und
die zweite Kostenfunktion eine Funktion ist, die durch Subtrahieren der konservierten Wertfunktion von der ersten Kostenfunktion erhalten wird, die Gesamtkosten darstellt und einen positiven Wert aufweist.

3. Bewertungsfunktions-Erzeugungsprogramm nach Anspruch 2, wobei der Korrekturwert zunimmt, während ein Abstand zwischen einem ersten Punkt aus der Vielzahl von Punkten und einem anderen Punkt zunimmt.

4. Bewertungsfunktions-Erzeugungsprogramm nach Anspruch 1, wobei

das diskrete Optimierungsproblem ein Rucksackproblem ist,
die konservierte Wertfunktion ein positiver Wert ist, der auf der Grundlage einer Gesamtsumme von Korrekturwerten erhalten wird, von denen jeder durch ein Produkt aus einem Korrekturkoeffizienten und den Kosten jedes einer Vielzahl von zu verpackenden Gegenständen dargestellt wird und einen Wert jedes der Vielzahl von Gegenständen korrigiert, und

die zweite Kostenfunktion eine Funktion ist, die durch Addieren der konservierten Wertfunktion zur ersten Kostenfunktion erhalten wird, die einen Gesamtwert darstellt und einen negativen Wert aufweist.

5. Bewertungsfunktions-Erzeugungsprogramm nach Anspruch 4, wobei der Korrekturkoeffizient ein erster Durchschnittswert ist, der ein Durchschnitt eines Wertes und eines Gewichts jedes der Vielzahl von Gegenständen ist, oder ein zweiter Durchschnittswert ist, der ein Durchschnitt einer vorbestimmten Anzahl der ersten Durchschnittswerte ist, die in absteigender Reihenfolge ausgewählt werden, oder ein Verhältnis des Wertes zum Gewicht eines Gegenstandes ist, der ausgewählt wird, unmittelbar bevor oder nachdem ein Gesamtgewicht einer Vielzahl von Gegenständen, die in absteigender Reihenfolge eines Verhältnisses des Wertes zum Gewicht ausgewählt werden, einen Zustand erreicht, der die Randbedingung nicht erfüllt.

6. Bewertungsfunktions-Erzeugungsprogramm nach Anspruch 1, wobei

das diskrete Optimierungsproblem ein quadratisches Zuordnungsproblem ist,
die konservierte Wertfunktion ein positiver Wert ist, der auf der Grundlage einer Gesamtsumme eines Korrekturwertes erster Kosten, die für jedes einer Vielzahl von zuzuordnenden Objekten bestimmt werden, oder eines Korrekturwertes zweiter Kosten, die für jedes einer Vielzahl von Zuordnungszielen der Vielzahl von Objekten bestimmt werden, erhalten wird, und
die zweite Kostenfunktion eine Funktion ist, die durch Subtrahieren der konservierten Wertfunktion von der ersten Kostenfunktion erhalten wird, die Gesamtkosten darstellt und einen positiven Wert aufweist.

7. Optimierungsverfahren, umfassend:

Erfassen (S1) von Probleminformationen (11a), die ein diskretes Optimierungsproblem darstellen, das eine Randbedingung aufweist, die erfüllt sein muss, damit eine Lösung des diskreten Optimierungsproblems gültig ist;
Erzeugen (S3) einer zweiten Bewertungsfunktion, die eine zweite Kostenfunktion einschließt, die einen zweiten absoluten Wert aufweist, der kleiner als ein erster absoluter Wert der ersten Kostenfunktion einer ersten Bewertungsfunktion ist, durch Subtrahieren einer konservierten Wertfunktion, die einen bestimmten Wert aufweist, wenn eine Lösung die Randbedingung erfüllt, von einer ersten Kostenfunktion oder durch Addieren der konservierten Wertfunktion zu der ersten Kostenfunktion, wobei die zweite Kostenfunktion durch die Subtraktion der konservierten Wertfunktion von der ersten Kostenfunktion oder durch die Addition der konservierten Wertfunktion zu der ersten Kostenfunktion dargestellt wird, wobei die erste Bewertungsfunktion auf der Grundlage der Probleminformation (11a) dargestellt wird und durch eine lineare Summe der ersten Kostenfunktion und einer Straffunktion dargestellt wird, die 0 wird, wenn die Randbedingung erfüllt ist, und einen anderen Wert als 0 annimmt, wenn die Randbedingung nicht erfüllt ist; und
Ausgeben (S4) von Informationen bezüglich der erzeugten zweiten Bewertungsfunktion an eine Ising-Vorrichtung (13), die nach einer optimalen Lösung des diskreten Optimierungsproblems sucht, indem sie ein Simulated-Annealing-Verfahren durchführt, wobei die Ising-Vorrichtung (13) nach der optimalen Lösung des diskreten Optimierungsproblems auf der Grundlage der Informationen bezüglich der erzeugten zweiten Bewertungsfunktion sucht.

8. Optimierungsvorrichtung (10), umfassend:

eine Speichereinheit (11), die konfiguriert ist, um Probleminformationen (11a) zu speichern, die ein diskretes Optimierungsproblem darstellen, das eine Randbedingung aufweist, die erfüllt sein muss, damit eine Lösung des diskreten Optimierungsproblems gültig ist;
eine Verarbeitungseinheit (12), die konfiguriert ist zum: Erfassen der Probleminformation (11a), Erzeugen einer zweiten Bewertungsfunktion, die eine zweite Kostenfunktion einschließt, die einen zweiten absoluten Wert aufweist, der kleiner ist als ein erster absoluter Wert der ersten Kostenfunktion einer ersten Bewertungsfunktion, indem eine konservierte Wertfunktion, die einen bestimmten Wert aufweist, wenn eine Lösung die Randbedingung erfüllt, von einer ersten Kostenfunktion subtrahiert wird, oder indem die konservierte Wertfunktion zu der ersten Kostenfunktion addiert wird, wobei die zweite Kostenfunktion durch die Subtraktion der konservierten Wertfunktion von der ersten Kostenfunktion oder durch die Addition der konservierten Wertfunktion zu der ersten Kostenfunktion dargestellt wird, wobei die erste Bewertungsfunktion auf der Grundlage der Probleminformation (11a) dargestellt wird und durch eine lineare Summe der ersten Kostenfunktion und einer Straffunktion dargestellt wird, die zu 0 wird, wenn die Randbedingung erfüllt ist, und einen anderen Wert als 0 annimmt, wenn die Randbedingung nicht erfüllt ist, und Ausgeben von Information bezüglich der erzeugten zweiten Bewertungsfunktion an eine Ising-Vorrichtung (13); und wobei die Ising-Vorrichtung (13) konfiguriert ist, um nach einer optimalen Lösung des diskreten Optimierungsproblems zu suchen, indem sie ein Simulated-Annealing-Verfahren auf der Grundlage der Informationen bezüglich der erzeugten zweiten Bewertungsfunktion durchführt.

**Revendications**

1. Programme de génération de fonction d'évaluation dans lequel un ordinateur (10) comprenant un dispositif Ising (13) exécute le procédé comprenant les étapes suivantes :

   acquérir (S1) des informations de problème (11a) représentant un problème d'optimisation discret qui présentent une condition de contrainte qui doit être satisfaite pour qu'une solution au problème d'optimisation discret soit valide ;
   générer (S3), en soustrayant d'une première fonction de coût une fonction de valeur conservée qui présente une certaine valeur lorsqu'une solution satisfait à la condition de contrainte, ou en ajoutant la fonction de valeur conservée à la première fonction de coût, une seconde fonction d'évaluation comprenant une seconde fonction de coût qui présente une seconde valeur absolue inférieure à une première valeur absolue de la première fonction de coût d'une première fonction d'évaluation, la seconde fonction de coût étant représentée par la soustraction de la fonction de valeur conservée à la première fonction de coût ou par l'ajout de la fonction de valeur conservée à la première fonction de coût, la première fonction d'évaluation étant représentée sur la base des informations de problème (11a) et étant représentée par une somme linéaire de la première fonction de coût et d'une fonction de pénalité qui devient 0 lorsque la condition de contrainte est satisfaite et qui devient une valeur différente de 0 lorsque la condition de contrainte n'est pas satisfaite ; et
   envoyer (S4) des informations relatives à la seconde fonction d'évaluation générée au dispositif Ising (13) qui recherche une solution optimale au problème d'optimisation discret en exécutant un procédé de recuit simulé, dans lequel
   le dispositif Ising (13) recherche la solution optimale au problème d'optimisation discrète en se basant sur les informations relatives à la seconde fonction d'évaluation générée.

2. Programme de génération de fonction d'évaluation selon la revendication 1, dans lequel

   le problème d'optimisation discret est un problème de routage,
   la fonction de valeur conservée est une valeur positive qui est obtenue sur la base d'une somme totale des valeurs de correction des coûts déterminés pour une pluralité de points, et
   la seconde fonction de coût est une fonction qui est obtenue en soustrayant la fonction de valeur conservée de la première fonction de coût qui représente un coût total et qui affiche une valeur positive.

3. Programme de génération de fonction d'évaluation selon la revendication 2, dans lequel la valeur de correction augmente au fur et à mesure que la distance entre un premier point parmi la pluralité de points et un autre point augmente.

4. Programme de génération de fonction d'évaluation selon la revendication 1, dans lequel

   le problème d'optimisation discret est un problème du sac à dos,
   la fonction de valeur conservée est une valeur positive qui est obtenue sur la base d'une somme totale de valeurs de correction dont chacune est représentée par le produit d'un coefficient de correction et d'un coût de chacun des articles à emballer et qui corrige une valeur de chacun de la pluralité d'articles, et
   la seconde fonction de coût est une fonction qui est obtenue en ajoutant la fonction de valeur conservée à la première fonction de coût qui représente une valeur totale et qui affiche une valeur négative.

5. Programme de génération de fonction d'évaluation selon la revendication 4, dans lequel le coefficient de correction est une première valeur moyenne qui correspond à une moyenne de la valeur et du poids de chacun de la pluralité d'articles, ou une seconde valeur moyenne qui correspond à une moyenne d'un nombre prédéterminé des premières valeurs moyennes sélectionnées dans un ordre décroissant, ou un rapport entre la valeur et le poids d'un article qui est sélectionné immédiatement avant ou après que le poids total d'une pluralité d'articles sélectionnés dans un ordre décroissant d'un rapport entre la valeur et le poids atteigne un état qui ne satisfait pas la condition de contrainte.

6. Programme de génération de fonction d'évaluation selon la revendication 1, dans lequel

le problème d'optimisation discret est un problème d'affectation quadratique,

la fonction de valeur conservée est une valeur positive qui est obtenue sur la base d'une somme totale d'une valeur de correction d'un premier coût déterminé pour chacun parmi une pluralité d'objets à affecter, ou d'une valeur de correction d'un second coût déterminé pour chacune parmi une pluralité de destinations d'affectation de la pluralité d'objets, et

la seconde fonction de coût est une fonction qui est obtenue en soustrayant la fonction de valeur conservée de la première fonction de coût qui représente un coût total et qui affiche une valeur positive.

**7.** Procédé d'optimisation comprenant les étapes suivantes :

acquérir (S1) des informations de problème (11a) représentant un problème d'optimisation discret qui présentent une condition de contrainte qui doit être satisfaite pour qu'une solution au problème d'optimisation discret soit valide ;

générer (S3), en soustrayant d'une première fonction de coût une fonction de valeur conservée qui présente une certaine valeur lorsqu'une solution satisfait à la condition de contrainte, ou en ajoutant la fonction de valeur conservée à la première fonction de coût, une seconde fonction d'évaluation comprenant une seconde fonction de coût qui présente une seconde valeur absolue inférieure à une première valeur absolue de la première fonction de coût d'une première fonction d'évaluation, la seconde fonction de coût étant représentée par la soustraction de la fonction de valeur conservée de la première fonction de coût ou par l'ajout de la fonction de valeur conservée à la première fonction de coût, la première fonction d'évaluation étant représentée sur la base des informations de problème (11a) et étant représentée par une somme linéaire de la première fonction de coût et d'une fonction de pénalité qui devient 0 lorsque la condition de contrainte est satisfaite et qui devient une valeur différente de 0 lorsque la condition de contrainte n'est pas satisfaite ; et

envoyer (S4) des informations relatives à la seconde fonction d'évaluation générée à un dispositif Ising (13) qui recherche une solution optimale au problème d'optimisation discret en exécutant un procédé de recuit simulé, le dispositif Ising (13) recherchant la solution optimale au problème d'optimisation discret en se basant sur les informations relatives à la seconde fonction d'évaluation générée.

**8.** Dispositif d'optimisation (10), comprenant :

une unité de stockage (11) configurée de manière à stocker des informations de problème (11a) représentant un problème d'optimisation discret qui présentent une condition de contrainte qui doit être satisfaite pour qu'une solution au problème d'optimisation discret soit valide ; et

une unité de traitement (12) configurée de manière à :

acquérir les informations de problème (1 1a),

générer, en soustrayant d'une première fonction de coût une fonction de valeur conservée qui présente une certaine valeur lorsqu'une solution satisfait la condition de contrainte, ou en ajoutant la fonction de valeur conservée à la première fonction de coût, une seconde fonction d'évaluation comprenant une seconde fonction de coût qui présente une seconde valeur absolue inférieure à une première valeur absolue de la première fonction de coût d'une première fonction d'évaluation, la seconde fonction de coût étant représentée par la soustraction de la fonction de valeur conservée de la première fonction de coût ou par l'ajout de la fonction de valeur conservée à la première fonction de coût, la première fonction d'évaluation étant représentée sur la base des informations de problème (11a) et étant représentée par une somme linéaire de la première fonction de coût et d'une fonction de pénalité qui devient 0 lorsque la condition de contrainte est satisfaite et qui devient une valeur différente de 0 lorsque la condition de contrainte n'est pas satisfaite, et

envoyer des informations relatives à la seconde fonction d'évaluation générée à un dispositif Ising (13) ; et

le dispositif Ising (13) étant configuré de manière à rechercher une solution optimale au problème d'optimisation discret en exécutant un procédé de recuit simulé en se basant sur les informations relatives à la seconde fonction d'évaluation générée.

# FIG. 1

APPLICATION EXAMPLE TO TRAVELING SALESMAN PROBLEM

START

ACQUIRE PROBLEM INFORMATION — S1

DETERMINE CORRECTION VALUE — S2

GENERATE EVALUATION FUNCTION — S3

OUTPUT INFORMATION REGARDING EVALUATION FUNCTION — S4

END

$d'_{i,j} = d_{i,j} - r_i - r_j$

COST FUNCTION: $E_d = \sum_{t=0}^{n-1} \sum_{i=0}^{n-1} \sum_{j=0}^{n-1} d'_{i,j} x_{t,i} x_{(t+1)modn,j}$

CONSERVED VALUE

$$= \sum_{t=0}^{n-1} \sum_{i=0}^{n-1} \sum_{j=0}^{n-1} d_{i,j} x_{t,i} x_{(t+1)modn,j} - 2 \sum_{i=0}^{n-1} r_i$$

OPTIMIZATION DEVICE — 10

STORAGE UNIT — 11

PROBLEM INFORMATION — 11a

PROCESSING UNIT — 12

ISING DEVICE — 13

# FIG. 2

# FIG. 3

# FIG. 4

ITEM 0

VALUE: $v_0$

WEIGHT: $w_0$

ITEM i

VALUE: $v_i$

WEIGHT: $w_i$

ITEM n-1

VALUE: $v_{n-1}$

WEIGHT: $w_{n-1}$

16

MAXIMUM TOTAL
WEIGHT: $W_{max}$

COST
FUNCTION: $E_v = - \sum_{i=0}^{n+m-1} v'_i x_i$

$v'_i = v_i - \beta w_i$

# FIG. 5

$$d'_{k,l}(i,j)=d_{k,l}-r_i-r_j$$

COST FUNCTION: $E'_c = \sum_{i=0}^{n-1}\sum_{j=0}^{n-1}\sum_{k=0}^{n-1}\sum_{l=0}^{n-1} f_{i,j}\,d'_{k,l}\,x_{i,k}\,x_{j,l}$

CONSERVED VALUE

$$= \sum_{i=0}^{n-1}\sum_{j=0}^{n-1}\sum_{k=0}^{n-1}\sum_{l=0}^{n-1} f_{i,j}\,d_{k,l}\,x_{i,k}\,x_{j,l} - \sum_{i=0}^{n-1} r_i \sum_{j=0}^{n-1}(f_{i,j}+f_{j,i})$$

# FIG. 6

INFORMATION PROCESSING DEVICE
(OPTIMIZATION DEVICE)                    20

| CPU | 101 |

| RAM | 22 |

| HDD | 23 |

| INTERFACE | 28 |

| IMAGE SIGNAL PROCESSING UNIT | 24 |

24a

| INPUT SIGNAL PROCESSING UNIT | 25 |

25a

| MEDIUM READER | 26 |

26a

| COMMUNICATION INTERFACE | 27 |

NETWORK    27a

BUS

| ISING DEVICE | 29 |

# FIG. 7

```
        ( START )
            │
            ▼
┌─────────────────────────────────┐
│   ACQUIRE PROBLEM INFORMATION   │~ S10
└─────────────────────────────────┘
            │
            ▼
┌─────────────────────────────────┐
│ DETERMINE CORRECTION VALUE OR   │~ S11
│    CORRECTION COEFFICIENT       │
└─────────────────────────────────┘
            │
            ▼
┌─────────────────────────────────┐
│   GENERATE EVALUATION FUNCTION  │~ S12
└─────────────────────────────────┘
            │
            ▼
┌─────────────────────────────────┐
│ OUTPUT INFORMATION REGARDING    │~ S13
│     EVALUATION FUNCTION         │
└─────────────────────────────────┘
            │
            ▼
┌─────────────────────────────────┐
│    EXECUTE SEARCH PROCESSING    │~ S14
└─────────────────────────────────┘
            │
            ▼
┌─────────────────────────────────┐
│       OUTPUT SEARCH RESULT      │~ S15
└─────────────────────────────────┘
            │
            ▼
         ( END )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200302306 A1
- JP 2003223322 A